(19) Europäisches Patentamt
European Patent Office
Office européen des brevets

(11) Veröffentlichungsnummer: **0 044 484**
**A2**

(12) # EUROPÄISCHE PATENTANMELDUNG

(21) Anmeldenummer: 81105390.9

(22) Anmeldetag: 10.07.81

(51) Int. Cl.3: **C08 L 77/00**
B 65 D 65/38, C 08 L 29/04

(30) Priorität: 16.07.80 DE 3026960

(43) Veröffentlichungstag der Anmeldung:
27.01.82 Patentblatt 82/4

(84) Benannte Vertragsstaaten:
BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Reinking, Klaus, Dr.
Robert-Stolz-Strasse 16b
D-5632 Wermelskirchen(DE)

(72) Erfinder: Michael, Dietrich, Dr.
Deswatines-Strasse 57
D-4150 Krefeld(DE)

(72) Erfinder: Schulte, Helmut
Horstdyk 73a
D-4150 Krefeld(DE)

(72) Erfinder: Nielinger, Werner, Dr.
Bärenstrasse 21
D-4150 Krefeld(DE)

(54) **Polyamidverpackungsmaterialien.**

(57) Verpackungsmaterialien aus Gemischen aus Polyamiden und verseiften Ethylen/Vinylacetat-Copolymeren.

EP 0 044 484 A2

Croydon Printing Company Ltd.

0044484

BAYER AKTIENGESELLSCHAFT 5090 Leverkusen, Bayerwerk
Zentralbereich
Patente, Marken und Lizenzen Str/kl-c

## Polyamidverpackungsmaterialien

Die vorliegende Erfindung betrifft Verpackungsmaterialien aus homogenen Gemischen von Polyamiden und verseiften Ethylen-Vinylacetat-Copolymeren.

Aliphatische Polyamide, insbesondere Polyamid-6, werden wegen ihrer guten mechanischen Eigenschaften, insbesondere ihrer hohen Zähigkeit, und wegen ihrer geringen Durchlässigkeit für Gase und Aromastoffe in größeren Mengen als Verpackungsstoffe eingesetzt. Bevorzugte Anwendung finden sie zur Verpackung von Nahrungsmitteln, z.B. von Fleischwaren, da sie eine geringe Sauerstoffdurchlässigkeit aufweisen. Wegen ihrer geringen Sperrwirkung für Wasserdampf müssen Polyamide aber - um ein Austrocknen des in ihnen verpackten Gutes zu vermeiden - im Verbund mit Kunststoffen mit besserer Sperrwirkung für Wasserdampf, z.B. Polyolefinen eingesetzt werden.

Für Verpackungen, die eine besonders lange Haltbarkeit der in ihnen verpackten Güter gewährleisten sollen, genügt die Sperrwirkung der Polyamide für Gase häufig nicht mehr. In diesen Fällen ist man gezwungen, Verbundsysteme, z.B. Verbundfolien, mit dickeren Schichten aus Polyamiden zu verwenden, oder aber die Gasdurchlässigkeit der Verbundsysteme durch eine nachträgliche Behandlung, z.B. durch Aufdampfen von Metallen oder durch Lakkieren mit Lösungen von Polyvinylidenchlorid, zu verringern. Diese Verfahren zur Verringerung der Gasdurchlässigkeiten von Polyamidfolien sind aufwendig. Außerdem kann bei der Verbrennung des Verpackungsmaterials Chlorwasserstoff freigesetzt werden.

Es wurde auch schon versucht, die Gasdichtigkeit von Polyamidfolien durch Verbinden mit Folien aus verseiftem Ethylenvinylacetat (EVAL) zu verbessern. Bei der Herstellung dieser Verbundfolien treten wiederholt Schwierigkeiten auf, da die EVAL-Copolymeren leicht vernetzen und so zu Quellkörpern in der Folie und zum Abbruch der Coextrusion führen können. Außerdem ist es bei einem Verbundsystem aus Polyamidfolie und EVAL-Folie nur in sehr beschränktem Maße möglich, die Gas- und Aromadichtigkeit je nach Einsatzgebiet des Verpakkungsmaterials zu variieren.

Es war daher sowohl von technischem als auch von wirtschaftlichem Interesse, gezielter die Gas- und Aromadurchlässigkeiten von Polyamidverpackungsmaterial zu variieren.

Dies gelang, indem man Polyamide oder Copolyamide oder Gemische der genannten Komponenten

mit vorzugsweise vollständig verseiften Ethylen-Vinylacetat-Copolymeren, deren Gehalt an Vinylalkohol-Einheiten mindestens 50 Gew.-% beträgt, in schmelzflüssigem Zustand mischt.

Die so erhaltenen Gemische sind homogene Massen, die ohne Schwierigkeiten durch Spritzgießen oder Extrudieren zu einwandfreien, bei geringen Schichtdicken transparenten Verpackungsmaterialien, z.B. Hohlkörpern oder Folien, verarbeitet werden können.

Die Gasdurchlässigkeiten dieser Gemische sind zum Teil erheblich geringer als die Gasdurchlässigkeiten der ihnen zugrundeliegenden Polyamide oder Copolyamide, so daß Verpackungen, die aus diesen Gemischen hergestellt sind, deutlich bessere Sperrwirkungen für Gase und Aromastoffe besitzen als Verpackungen aus den entsprechenden reinen Polyamiden oder Copolyamiden.

Gemische aus Polyamiden und verseiften Ethylen-Vinylacetat-Copolymeren sind bereits beschrieben worden. In der DAS 19 20 043 werden spritzfähige Gemische aus 70 - 99,9 Gew.-% eines Polyamids und 0,1 - 30 Gew.-% eines verseiften Ethylen-Vinylacetat-Copolymeren, das 10 - 40 Gew.-% an Vinylalkohol-Einheiten enthält, offenbart, die zu Spritzgußformkörpern verarbeitet werden.

Die Verwendung von Gemischen aus Polyamiden oder Copolyamiden und verseiften Ethylen-Vinylacetat-Copolymeren als Verpackungsmaterialien war hingegen nicht bekannt.

Die Verarbeitbarkeit dieser Mischungen zu Verpackungsmaterial, insbesondere von Folien war auch nicht zu erwarten, da aus der Literatur (H. Kawaguchi und T. Iwanami, Japan Plastics 1975, Nr. 1, S. 11) bekannt ist, daß verseifte Ethylen-Vinylacetat-Copolymere mit Polyamiden im schmelzflüssigen Zustand rasch unter Zunahme der Viskosität reagieren, wobei schließlich vernetzte Produkte entstehen. Dieser Befund beeinträchtigt nicht die bisher bekannte Verbeitung der Mischungen, da Viskositätsänderungen während des Spritzgießens unerheblich sind. Man konnte aber nicht annehmen, daß die Herstellung von Folien ohne Schwierigkeiten verläuft und das sich Mischungen aus Polyamiden und verseiften Ethylen/Vinylacetat-Copolymeren zur Herstellung von Verpackungsmaterialien, insbesondere von Folien durch Extrusion eignen.

Gegenstand der Erfindung sind daher Verpackungsmaterialien, insbesondere Folien, aus Gemischen aus mindestens einem Polyamid und/oder Copolyamid und zu $>80$ % verseiftem Ethylen-Vinylacetat-Copolymeren, deren Gehalt an Vinylalkohol-Einheiten mindestens 50 Gew.-% beträgt.

Das Mischungsverhältnis der beiden Polymerkomponenten kann in einem weiten Bereich variieren. Vorzugsweise werden 20 - 60 Gew.-% Polyamid mit 40 - 80 Gew.-% verseiften Ethylen-Vinylacetat-Copolymeren gemischt, um daraus Verpackungsmaterial herzustellen.

Geeignete Polyamide im Sinne der vorliegenden Erfindung sind alle aliphatischen oder cycloaliphatischen Polyamide sowie alle aliphatisch/cycloaliphatischen, aliphatisch/aromatischen und cycloaliphatisch/aromatischen Polyamide oder Copolyamide, sofern sie nicht bei Temperaturen oberhalb von 240°C erweichen oder schmelzen. Solche Polyamide sind z.B. Polyamide, die aus Aminocarbonsäuren mit 4 - 12 Kohlenstoffatomen, z.B. ε-Aminocapronsäure, ω-Aminoundecansäure, ω-Aminododecansäure oder entsprechenden Lactamen nach üblichen Verfahren der Polykondensation oder Polymerisation hergestellt werden. Ferner kommen solche Polyamide in Betracht, die durch Polykondensation aliphatischer oder cycloaliphatischer Diamine mit aliphatischen, cycloaliphatischen oder aromatischen Dicarbonsäuren erhalten werden.

Derartige Diamine sind beispielsweise Ethylendiamin, Hexamethylendiamin, Dekamethylendiamin, Dodecamethylendiamin, 2,2,4-Trimethyl-hexamethylendiamin, 2,4,4-Trimethyl-hexamethylendiamin, 1,4-Diaminomethyl-cyclohexan, 4,4'-Diamino-dicyclohexylmethan, 3,3'-Dimethyl-4,4'-dicyclohexylmethan, Isophorondiamin sowie 2,5- und 2,6-Bis-(aminomethyl)-norbornan. Beispiele für Dicarbonsäuren sind Oxalsäure, Adipinsäure, Azelainsäure, Decandicarbonsäure, Hexadecandicarbonsäure, 2,4,4- und 2,2,4-Trimethyladipinsäure, Isophthalsäure und Terephthalsäure.

Copolyamide im Sinne der vorliegenden Erfindung sind solche Polyamide, die durch Copolymerisation oder durch

Copolykondensation mehrerer der vorstehend genannten Aminocarbonsäuren, deren Lactamen, Diaminen und Dicarbonsäuren hergestellt werden können. Polyamid-6, Polyamid-6,6 und deren Copolyamide sind bevorzugt.

Als verseifte Ethylen-Vinylacetat-Copolymere kommen solche in Betracht, die 50 bis 99 Gew.-% an Vinylalkohol-Einheiten enthalten. So werden vorzugsweise vollständig verseifte Ethylen-Vinyl-acetat-Copolymeren, die mindestens 50 Gew.-%, vorzugsweise mindestens 65 Gew.-%, besonders bevorzugt $>85$ Gew.-%, an Vinylacetat-Einheiten enthalten, verwendet, wie sie z.B. in der DOS 1 620 958 beschrieben sind. Der Verseifungsgrad der Copolymeren sollte mindestens 80 %, vorzugsweise $>90$ %, besonders bevorzugt 98 % sein.

Für den Einsatz als Verpackungsmaterial mit möglichst niedriger Durchlässigkeit für Gase und Aromastoffe ist es vorteilhaft, verseifte Ethylen-Vinylacetat-Copolymere mit möglichst hohen Gehalten an einpolymerisierten Vinylalkohol-Einheiten einzusetzen. Diese sind jedoch hinsichtlich ihrer thermoplastischen Verarbeitbarkeit der verseiften Ethylen-Vinylacetat-Copolymeren mit geringeren Gehalten an Vinylalkohol unterlegen.

Den besten Kompromiß zwischen geringer Gasdurchlässigkeit und guter thermoplastischer Verarbeitbarkeit stellen solche verseiften Ethylen-Vinylacetat-Copolymere

dar, die 75 bis 90 Gew.-% an einpolymerisiertem Vinylalkohol enthalten. Diese Copolymeren zeichnen sich gegenüber entsprechenden Copolymeren mit geringeren Gehalten an einpolymerisiertem Vinylalkohol durch geringere Gasdurchlässigkeiten, gegenüber entsprechenden Copolymeren mit höheren Gehalten an einpolymerisiertem Vinylalkohol durch bessere thermoplastische Verarbeitbarkeit, gegenüber reinem Polyvinylalkohol zudem durch höhere thermische Stabilität aus. Die auf ihnen basierenden erfindungsgemäßen Verpackungswerkstoffe stellen daher die günstigste Kombination von Sperrwirkung für Gase und Aromastoffe und thermoplastischer Verarbeitbarkeit dar.

Die Gasdurchlässigkeit der Verpackungsmaterialien hängt von der Zusammensetzung der Mischung in der Weise ab, daß die Gasdurchlässigkeiten umso niedriger sind, je höher der Gehalt an verseiften Ethylen-Vinylacetat-Copolymeren ist. Da jedes Mischungsverhältnis möglich ist, kann die Gasdurchlässigkeit des Verpackungsmaterials beliebig eingestellt und somit der jeweiligen Anwendung angepaßt werden.

Die erfindungsgemäßen Verpackungsmaterialien können nach verschiedenen Verfahren hergestellt werden. Beispielsweise können die Granulate der Komponenten zunächst mechanisch vorgemischt und die Granulatgemische im Extruder aufgeschmolzen werden. Nach der Homogenisierung im Extruder kann die Schmelze dann als Rundstrang extrudiert und nach dem Erkalten granuliert werden. Die so erhaltenen Granulate können zur Herstellung von Verpackungsmaterialien, z.B. Folien, nach bekannten Verfahren eingesetzt werden.

Es ist jedoch auch möglich, die durch das Mischen der Granulate von Polyamiden und der Granulate von verseiften Ethylen-Vinylacetat-Copolymeren erhaltenen Granulatmischungen direkt der weiteren Verarbeitung zur Herstellung von Verpackungsmaterialien, z.B. Folien oder Hohlkörpern, zuzuführen. Voraussetzung für diese Arbeitsweise ist allerdings, daß die verwendeten Extruder oder Spritzgießmaschinen die Schmelzen hinreichend gut homogenisieren.

Natürlich ist es auch möglich, aus mehreren verschiedenen Polyamiden oder Copolyamiden Gemische herzustellen und diese dann mit verseiften Ethylen-Vinylacetat-Copolymeren zu Verpackungswerkstoffen mit geringen Gasdurchlässigkeiten im Sinne der vorliegenden Erfindung zu mischen.

Bei der thermoplastischen Verarbeitung, insbesondere bei der Extrusion von Folien aus den erfindungsgemäßen Gemischen sollten Verarbeitungstemperaturen unterhalb von 220 - 230°C, bevorzugt unterhalb von 200 - 210°C, gehalten werden.

Außer ihren geringen Durchlässigkeiten für Gase und Aromastoffe sind die erfindungsgemäßen Verpackungsmaterialien, insbesondere Folien, weit besser tiefziehbar und biaxial verstreckbar als Folien aus Polyamiden und können ohne Schwierigkeiten verschweißt werden.

Falls es erforderlich ist, können die erfindungsgemäßen Gemische durch Einarbeiten von Zuschlagstoffen, z.B. Gleitmitteln, Pigmenten oder Stabilisatoren, modifiziert werden.

Weiterhin ist es möglich, unter Verwendung der von den Polyamiden her bekannten Technologien und der daher bekannten Haftvermittler Verbundwerkstoffe, z.B. Verbundfolien, mit z.B. Polyolefinen herzustellen.

Beispiel 1

Polyamid 6 und ein vollständig verseiftes Ethylen-Vinylacetat-Copolymerisat (EVAL-Copolymerisat), dessen Gehalt an einpolymerisierten Vinylalkohol-Einheiten 79 Gew.-% beträgt, werden als Granulate in den in Tabelle 1 angegebenen Gewichtsverhältnissen gemischt. Die Mischungen werden bei Schmelztemperaturen von 225 - 230°C in einem Einwellenextruder homogenisiert, die Schmelze als Rundstrang extrudiert, der nach dem Erkalten granuliert wird. Die Granulate werden unter Verwendung einer Breitschlitzdüse zu transparenten, zähen und gut tiefziehbaren Folien extrudiert. Die nach DIN 53 536 gemessenen Permeationskoeffizienten dieser Folien für Sauerstoff und für Kohlendioxid werden in Tabelle 1 mit den Permeationskoeffizienten

$$\left[\frac{cm^3 \,.\, (NTP)\,.cm}{cm^2 \,.\, sc.\ cm\ (Hg)} \,.\, 10^{-9}\right]$$

von reinem Polyamid 6 verglichen:

| | | | | |
|---|---|---|---|---|
| Polyamid 6 | 100 % | 80 % | 60 % | 40 % |
| EVAL-Copolymerisat | - | 20 % | 40 % | 60 % |
| Sauerstoff | 0,002 | 0,0005 | 0,0002 | 0,0001 |
| Kohlendioxid | 0,008 | 0,002 | 0,0008 | 0,0005 |

Aus den Werten in Tabelle 1 ist ersichtlich, daß die erfindungsgemäßen Folien deutlich undurchlässiger für Sauerstoff und für Kohlendioxid sind als Folien aus Polyamid 6.

Beispiel 2

Polyamid 6 und ein vollständig verseiftes Ethylen-Vinylacetat-Copolymerisat (EVAL-Copolymerisat), dessen Gehalt an einpolymerisierten Vinylalkohol-Einheiten 71,5 Gew.-% beträgt, werden als Granulate in den in Tabelle 2 angegebenen Gewichtsverhältnissen gemischt. Aus den Granulatmischungen werden in einem Einwellenextruder bei Schmelztemperaturen von 225 - 230°C Rundstränge extrudiert, die anschließend granuliert werden. Diese Granulate werden aus einer Breitschlitzdüse als Folien extrudiert, die zäh, transparent und gut tiefziehbar sind. Die an ihnen nach DIN 53 536 gemessenen Permeationskoeffizienten

$$\left[\frac{cm^3\ (NTP)\ .\ cm}{cm^2\ .\ sec\ .\ cm\ (Hg)}\ .\ 10^{-9}\right]$$

für Sauerstoff werden in Tabelle 2 dem Permeationskoeffizenten für Sauerstoff von Polyamid 6 gegenübergestellt:

Tabelle 2

| | | | | |
|---|---|---|---|---|
| Polyamid 6 | 100 % | 80 % | 60 % | 40 % |
| EVAL-Copolymerisat | - | 20 % | 40 % | 60 % |
| Sauerstoff | 0,002 | 0,0012 | 0,0007 | 0,0004 |

Beispiel 3

60 Gewichtsteile Polyamid 6 und 40 Gewichtsteile des vollständig verseiften Ethylen-Vinylacetat-Copolymeren aus Beispiel 1 werden als Granulate mechanisch gemischt. Aus diesem Granulatgemisch werden mittels einer Breitschlitzdüse Folien bei 230°C Schmelzentemperatur extrudiert. Die nach DIN 53 536 an diesen Folien gemessenen Permeationskoeffizienten für Sauerstoff und Kohlendioxid (s. Tabelle 3) stimmen mit den Permeationskoeffizienten des gleichen, nach Beispiel 1 hergestellen Gemisches (s. Tabelle 1) überein.

Tabelle 3

| | |
|---|---|
| Polyamid 6 | 60 % |
| EVAl-Copolymerisat | 40 % |
| Sauerstoff | $0,00025.10^{-9}$ |
| Kohlendioxid | $0,00085.10^{-9}$ |

Beispiel 4

50 Gewichtsteile Polyamid 11 und 50 Gewichtsteile des in Beispiel 1 beschriebenen verseiften Ethylen-Vinylacetat-Copolymeren werden als Granulate gemischt. Diese Granulatmischung wird in einem Einwellenextruder bei 200 - 210°C geschmolzen und als Rundstänge extrudiert, die dann granuliert werden. Aus diesem Granulat werden unter Zuhilfenahme einer Breitschlitzdüse transparente, zähe und gut tiefziehbare Folien extrudiert, deren nach DIN 53 536 gemessener Permeationskoeffizent für Sauerstoff erheblich niedriger ist als der Permeationskoeffizient von Folien aus reinem Polyamid 11.

Tabelle 4

| | | |
|---|---|---|
| Polyamid 11 | 100 % | 50 % |
| EVAL-Copolymerisat | - | 50 % |
| Sauerstoff | $0{,}006.10^{-9}$ | $0{,}0007.10^{-9}$ |

Beispiel 5

60 Gewichtsteile eines Copolyamids, das aus 57 Mol-% -Caprolactam, 43 Mol-% Adipinsäure und 43 Mol-% Isophorondiamin hergestellt worden war, und 40 Gewichtsteile des vollständig verseiften Ethylen-Vinylacetat-Copolymeren aus Beispiel 1 werden als Granulate gemischt. Aus dieser Granulatmischung werden bei 200°C Schmelztemperatur Rundstränge extrudiert, die anschließend granuliert werden. Diese Granulate werden unter Verwendung einer Breitschlitzdüse transparente, zähe und gut tiefziehbare Folien extrudiert. Die an diesen Folien nach DIN 53 536 gemessenen Permeationskoeffizienten für Sauerstoff und für Kohlendioxid liegen deutlich unter den Permeationskoeffizienten von Folien aus dem reinen Copolyamid.

Tabelle 5

| | | |
|---|---|---|
| Copolyamid | 100 % | 60 % |
| EVAL-Copolymerisat | - | 40 % |
| Sauerstoff | $0{,}002 \cdot 10^{-9}$ | $0{,}00025 \cdot 10^{-9}$ |
| Kohlendioxid | $0{,}01 \cdot 10^{-9}$ | $0{,}0005 \cdot 10^{-9}$ |

Beispiel 6

50 Gewichtsteile eines Copolyamids aus 40 Mol-% -Aminocapronsäure, 60 Mol-% Hexamethylendiamin und 60 Mol-% Adipinsäure werden mit 50 Gewichtsteilen des in Beispiel 1 beschriebenen verseiften Ethylen-Vinylacetat-Copolymeren vermischt. Diese Mischung wird im Einwellenextruder bei einer Schmelztemperatur von 200 - 210°C homogenisiert und als Rundstrang extrudiert. Der Rundstrang wird nach dem Erkalten granuliert. Aus diesem Granulat werden mittels einer Breitschlitzdüse transparente, zähe und gut tiefziehbare Folien extrudiert. Tabelle 6 zeigt, daß die an diesen Folien nach DIN 53 536 gemessenen Permeationskoeffizienten für Sauerstoff und für Kohlendioxid erheblich niedriger sind als die Permeationskoeffizienten von Folien aus dem reinen Copolyamid.

Tabelle 6

| | | |
|---|---|---|
| Copolyamid | 100 % | 50 % |
| EVAL-Copolymerisat | - | 50 % |
| Sauerstoff | $0{,}003.10^{-9}$ | $0{,}0003.10^{-9}$ |
| Kohlendioxid | $0{,}009.10^{-9}$ | $0{,}0007.10^{-9}$ |

Beispiel 7

60 Gewichtsteile des in Beispiel 6 beschriebenen Copolyamids und 40 Gewichtsteile des in Beispiel 2 beschriebenen verseiften Ethylen-Vinylacetat-Copolymeren werden als Granulate gemischt. Aus diesem Granulatgemisch werden bei 200°C Schmelztemperatur direkt Folien aus einer Breitschlitzdüse extrudiert, wobei ein Einwellenextruder verwendet wird, dessen Schnecke in der Meteringzone mit einem besonderen Mischteil ausgestattet ist. Die erhaltenen Folien sind transprent, zäh und gut durch Tiefziehen verformbar. Der nach DIN 53 536 gemessene Permeationskoeffizient für Sauerstoff ist beträchtlich niedriger als der von Folien aus dem reinen Copolyamid (S. Tabelle 7).

Tabelle 7

| | | |
|---|---|---|
| Copolyamid | 100 % | 60 % |
| EVAL-Copolymerisat | - | 40 % |
| Sauerstoff | $0{,}003.10^{-9}$ | $0{,}00085.10^{-9}$ |

Beispiel 8

60 Gewichtsteile eines durch Polykondensation von 94 Mol-% $\varepsilon$-Caprolactam, 6 Mol-% Isophorondiamin und 6 Mol-% Isophthalsäure hergestellten Copolyamids werden mit 40 Gewichtsteilen des in Beispiel 1 beschriebenen verseiften Ethylen-Vinylacetat-Copolymeren gemischt. Die Mischung wird bei 230°C im Einwellenextruder homogenisiert und als Rundstrang extrudiert, der anschließend granuliert wird. Aus dem Granulat werden unter Verwendung einer Breitschlitzdüse transparente, zähe und gut tiefziehbare Folien extrudiert, deren nach DIN 53 536 gemessene Permeationskoeffizienten für Sauerstoff und für Kohlendioxid erheblich unter den Permeationskoeffizienten von Folien aus dem reinen Copolyamid liegen (s. Tabelle 8).

Tabelle 8

| | | |
|---|---|---|
| Copolyamid | 100 % | 60 % |
| EVAL-Copolymerisat | - | 40 % |
| Sauerstoff | $0{,}004.10^{-9}$ | $0{,}00055.10^{-9}$ |
| Kohlendioxid | $0{,}01.10^{-9}$ | $0{,}001.10^{-9}$ |

Beispiel 9

Die in Beispiel 1 beschriebenen Gemische aus Polyamid 6 und einem vollständig verseiften Ethylen-Vinylacetat-Copolymeren, dessen Gehalt an einpolymerisiertem Vinylalkohol 79 Gew.-% beträgt, werden zusammen mit einem Polyethylen niedriger Dichte (0,923 g/cm³) zu einer Verbundfolie coextrudiert. Als Haftvermittler wird dabei ein Pfropfcopolymerisat von Maleinsäureanhydrid auf Polyethylen (Maleinsäureanhydrid-Gehalt 0,9 %) eingesetzt, das zwischen die Schichten aus den Gemischen aus Beispiel 1 und aus Polyethylen extrudiert wird. Die so hergestellten Verbundfolien zeigen zwischen den einzelnen Schichten ebenso gute Verbundhaftung wie Verbundfolien, die anstelle von Gemischen aus Polyamid 6 und verseiften Ethylen-Vinylacetat-Copolymeren reines Polyamid 6 enthalten.

Beispiel 10

Aus einem gemäß Beispiel 1 hergestellten Gemisch aus 60 Gewichtsteilen Polyamid 6 und 40 Gewichtsteilen eines vollständig verseiften Ethylen-Vinylacetat-Copolymeren, dessen Gehalt an einpolymerisiertem Vinylalkohol 70 Gew.-% beträgt, werden nach dem Spritzblasverfahren bei 230°C Flaschen mit einem Volumen von 1000 cm³ hergestellt. In diese Flaschen und in Vergleichsflaschen aus reinem Polyamid 6 wird eine intensiv riechende Substanz (Vanilleöl) eingefüllt. Die Flaschen werden dann in verschlossenem Zustand bei 23°C sechs Monate lang in hermetisch

verschlossen Glasgefäßen gelagert. Nach Ablauf dieser Zeit werden die Glasgefäße geöffnet. In den Glasgefäßen, in denen die mit Vanille-Öl gefüllten Flaschen aus dem Gemisch aus Polyamid 6 und verseiftem Ethylen-Vinylacetat-Copolymeren gelagert hatten, war kein Geruch nach Vanille-Öl, in den Glasgefäßen, in denen die mit Vanille-Öl gefüllen Flaschen aus reinem Polyamid 6 gelagert hatten, dagegen ein starker Geruch nach Vanille-Öl wahrnehmbar.

Patentansprüche

1. Verpackungsmaterialien, insbesondere Folien oder Hohlkörper, aus Gemischen aus

   1) mindestens einem Polyamid und/oder Copolyamid und

   2) einem verseiften Ethylen/Vinylacetat-Copolymeren, das zu mindestens 50 Gew.-% aus Vinylalkoholeinheiten besteht.

2. Verpackungsmaterialien nach Anspruch 1, enthaltend 20 - 60 Gew.-% der Komponente 1) und 40 - 80 Gew.-% der Komponente 2).

3. Verpackungsmaterialien nach Ansprüchen 1 und 2, dadurch gekennzeichnet, daß das verseifte Ethylen/Vinylacetat-Copolymerisat aus 50-99 Gew.-% Vinylalkohol-Einheiten aufgebaut ist.

4. Verpackungsmaterialien nach Ansprüchen 1-3, dadurch gekennzeichnet, daß das Ethylen/Vinylacetat-Copolymerisat zu mindest zu 80 % verseift ist.

5. Verpackungsmaterialien nach Ansprüchen 1-4, dadurch gekennzeichnet, daß das Ethylen/Vinylacetat zu >90 % verseift ist.

6. Verpackungsmaterialien nach Ansprüchen 1-6, dadurch gekennzeichnet, daß sie mit mindestens einer Polyolefinfolie laminiert sind.